# EUROPEAN PATENT SPECIFICATION

(11) **EP 4 301 035 B1**
(45) Date of publication and mention of the grant of the patent: **25.03.2026**
(21) Application number: 21934468.6
(22) Date of filing: 14.10.2021
(51) Int. Cl.: H04W 28/24, H04L 45/302, H04W 28/02, H04W 72/12, H04W 80/02

(54) **QUALITY OF SERVICE FLOW TRANSMISSION METHOD AND APPARATUS, BASE STATION, TERMINAL, AND STORAGE MEDIUM**
VERFAHREN UND VORRICHTUNG ZUR ÜBERTRAGUNG VON DIENSTGÜTEFLÜSSEN, BASISSTATION, ENDGERÄT UND SPEICHERMEDIUM
PROCÉDÉ ET APPAREIL DE TRANSMISSION D'UN FLUX DE QUALITÉ DE SERVICE, STATION DE BASE, TERMINAL ET SUPPORT DE STOCKAGE

(30) Priority: 01.04.2021 CN 202110358304
(43) Date of publication of application: 03.01.2024
(73) Proprietor: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); LU, Ting, Shenzhen, Guangdong 518057 (CN); TAN, Jie, Shenzhen, Guangdong 518057 (CN)
(74) Representative: Iannone, Carlo Luigi
(86) International application number: PCT/CN2021/123728
(87) International publication number: WO 2022/205832

(56) References cited:
- EP-A1- 1 386 465
- WO-A1-2017/173897
- WO-A1-2018/059313
- CN-A- 107 135 485
- CN-A- 111 132 271
- US-A1- 2004 186 883
- US-A1- 2012 218 942
- US-A1- 2019 268 798

## Description

### TECHNICAL FIELD

The present application relates to the field of radio communication technology, for example, a quality of service flow transmission method and apparatus, a base station, and a storage medium.

### BACKGROUND

In a new radio (NR) communication network, a quality of service (QoS) parameter of traffic is configured to a base station through a control plane signaling, and the QoS parameter is configured based on a protocol data unit (PDU) session and a QoS flow level. One user equipment (UE) may establish up to 256 PDU sessions. One PDU session may contain up to 64 QoS flows. A QoS parameter is configured for a QoS flow. For downlink traffic, each PDU of the user plane is transmitted on a corresponding PDU tunnel, and the extension header of a PDU carries a QoS flow identifier (QFI) indication. In this manner, the association between a PDU and a QoS parameter is implemented, and the QoS parameter configuration of a QoS level is implemented. For uplink traffic, a base station may map different QoS flows to different data radio bearers (DRBs). Different DRBs correspond to different logical channel groups (LCGs). A UE carries an LCG identity (ID) in a buffer status report (BSR) request. The base station allocates an uplink scheduling resource based on BSR information. In this manner, different QoS parameters correspond to different resource allocation priorities. However, in the QoS strategy, multiple PDUs may not be corresponded to a respective application message, and information such as the category and the source of an application message cannot be identified. As a result, the availability and reliability of the application message are reduced. An application layer QoS directly determines the user experience. For example, an application message is not completely sent to a receiver, and even if the receiver receives a part of the application message, the receiver still considers that the message is not successfully received. As a result, the integrity of the application message is seriously affected, and the user experience is greatly decreased.

Further relevant technologies are also known from WO 2018/059313 A1 (HUAWEI TECH CO LTD [CN]), 5 April 2018 (2018-04-05); WO 2017/173897 A1 (ZTE CORP [CN]), 12 October 2017 (2017-10-12); and US 2019/268798 A1 (JEONG SANG SOO [KR] ET AL), 29 August 2019 (2019-08-29).

### SUMMARY

The present application provides a quality of service flow transmission method and apparatus, a base station, a terminal, and a storage medium to determine the category corresponding to a quality of service flow, enhance the accuracy of quality of service flow transmission, reduce the problem of an information transmission error caused because the category of an application message cannot be identified, enhance the integrity of the application message, and improve a user experience. The features of the method and apparatus according to the present invention are defined in the independent claims. Further improvements are provided in the dependent claims.

An embodiment of the present application provides a quality of service flow transmission method. The method includes the following:
At least one PDU session sent by a core network is acquired. The information frame format of the PDU session carries indication information. The category to which the at least one PDU session belongs is determined according to the indication information.

An embodiment of the present application provides another quality of service flow transmission method. The method includes the following:
At least one issued packet data convergence protocol (PDCP) data PDU is received. The PDCP data PDU carries indication information. Message receiving feedback is sent according to the indication information.

An embodiment of the present application provides a quality of service flow transmission apparatus. The apparatus includes a session acquisition module and an application layer home module.

The session acquisition module is configured to acquire at least one PDU session sent by the core network. The information frame format of the PDU session carries the indication information. The application layer belonging module is configured to determine the category to which each PDU session belongs according to the indication information.

An embodiment of the present application provides another quality of service flow transmission apparatus. The apparatus includes a data unit receiving module and a message receiving feedback module.

The data unit receiving module is configured to receive at least one issued PDCP data PDU. The PDCP data PDU carries indication information. The message receiving feedback module is configured to send message receiving feedback according to the indication information.

An embodiment of the present application provides a base station. The base station includes one or more processors and a memory configured to store one or more programs. When executing the one or more programs, the one or more processors are caused to perform the quality of service flow transmission method according to any one of embodiments of the present application.

An embodiment of the present application provides a terminal. The terminal includes one or more processors and a memory configured to store one or more programs. When executing the one or more programs, the one or more processors are caused to perform the quality of service flow transmission method according to any one of the embodiments of the present application.

In the embodiments of the present application, at least one PDU session sent by the core network is acquired. The information frame format of the PDU session carries the indication information. The indication information is used for determining the categories corresponding to different PDU sessions. The category corresponding to each PDU session is determined through application message indication information. In this manner, the accuracy of quality of service flow transmission can be enhanced, the problem of an information transmission error caused because the category of the PDU session cannot be identified can be solved, the integrity of message transmission can be enhanced, and the user experience can be improved.

### BRIEF DESCRIPTION OF DRAWINGS

FIG. 1 is a diagram illustrating the structure of an information frame format of a protocol data unit session in the related art.
FIG. 2 is a flowchart of a quality of service flow transmission method according to an embodiment of the present application.
FIG. 3 is a flowchart of another quality of service flow transmission method according to an embodiment of the present application.
FIG. 4 is a flowchart of another quality of service flow transmission method according to an embodiment of the present application.
FIG. 5 is a flowchart of another quality of service flow transmission method according to an embodiment of the present application.
FIG. 6 is a diagram illustrating the information frame format of a PDU session according to an embodiment of the present application.
FIG. 7 is a diagram illustrating the information frame format of another PDU session according to an embodiment of the present application.
FIG. 8 is a diagram illustrating the information frame format of another PDU session according to an embodiment of the present application.
FIG. 9 is a diagram illustrating transmission of a PDU session according to an embodiment of the present application.
FIG. 10 is a diagram illustrating transmission of another PDU session according to an embodiment of the present application.
FIG. 11 is a diagram illustrating the information frame format of another PDU session according to an embodiment of the present application.
FIG. 12 is a flowchart of a quality of service flow transmission method according to an embodiment of the present application.
FIG. 13 is a diagram illustrating a buffer status report according to an embodiment of the present application.
FIG. 14 is a diagram illustrating another buffer status report according to an embodiment of the present application.
FIG. 15 is a diagram illustrating another buffer status report according to an embodiment of the present application.
FIG. 16 is a diagram illustrating another buffer status report according to an embodiment of the present application.
FIG. 17 is a diagram illustrating another buffer status report according to an embodiment of the present application.
FIG. 18 is a diagram illustrating another buffer status report according to an embodiment of the present application.
FIG. 19 is a flowchart of another quality of service flow transmission method according to an embodiment of the present application.
FIG. 20 is a flowchart of another quality of service flow transmission method according to an embodiment of the present application.
FIG. 21 is a flowchart of another quality of service flow transmission method according to an embodiment of the present application.
FIG. 22 is a flowchart of another quality of service flow transmission method according to an embodiment of the present application.
FIG. 23 is a flowchart of another quality of service flow transmission method according to an embodiment of the present application.
FIG. 24 is a diagram illustrating the structure of a PDCP data PDU according to an embodiment of the present application.
FIG. 25 is a diagram illustrating the structure of another PDCP data PDU according to an embodiment of the present application.
FIG. 26 is a diagram illustrating the structure of another PDCP data PDU according to an embodiment of the present application.
FIG. 27 is a diagram illustrating the structure of another PDCP data PDU according to an embodiment of the present application.
FIG. 28 is a diagram illustrating the structure of a quality of service flow transmission apparatus according to an embodiment of the present application.
FIG. 29 is a diagram illustrating the structure of another quality of service flow transmission apparatus according to an embodiment of the present application.
FIG. 30 is a diagram illustrating the structure of a base station according to an embodiment of the present application.
FIG. 31 is a diagram illustrating the structure of a terminal according to an embodiment of the present application.

### DETAILED DESCRIPTION

Sufixes such as "module", "part", or "unit" used for indicating elements in the subsequent description merely facilitate the description of the present application, and have no particular meaning in themselves. Therefore, "module", "part", or "unit" may be used in a mixed manner.

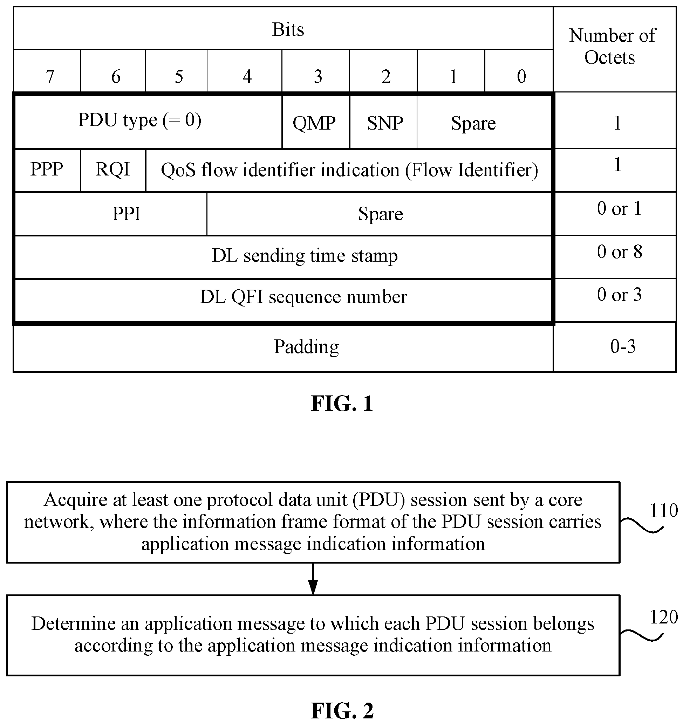

FIG. 1 is a diagram illustrating the structure of the information frame format of a protocol data unit session in the related art. Referring to FIG. 1, the information frame format of a protocol data unit (PDU) session is an extension header carried in a general packet radio service (GPRS) tunnel protocol (GTP) - user message protocol data unit, such as an NR RAN container or a PDU session container. It can be seen from this information frame format of the PDU session that a base station cannot determine which PDUs correspond to one application message from the information frame format. In industrial Internet of things (IIoT) traffic, an application message is considered to be successfully transmitted only if the application message is successfully transmitted in survival time. The information frame format of the PDU session is not conducive to the successful transmission of the application message.

An embodiment of the present application provides a quality of service flow transmission method. This embodiment of the present application is applied to the case where the category of a protocol data unit session is determined. The method is executed by a quality of service flow transmission apparatus according to this embodiment of the present application. The apparatus is performed by software and/or hardware and is generally integrated in a base station. The method according to this embodiment of the present application includes the following:
In S1, at least one PDU session sent by the core network is acquired. The information frame format of the PDU session carries indication information.

In this embodiment of the present application, the base station receives one or more protocol data unit sessions sent by the core network. Each protocol data unit session carries indication information. The indication information is information on a field in the information frame format of the PDU session.

In S2, the category to which each PDU session belongs is determined according to the indication information.

The category may be information reflecting the attribute of the PDU session. The category may include a traffic type, a quality of service flow type, a transmission method, or the like.

The category to which each PDU session belongs is determined according to different values of the indication information in the information frame format of each PDU session, and different values of the indication information represent that the corresponding PDU sessions belong to different categories.

Based on the preceding embodiment of the present application, the indication information includes a PDU session category index. Accordingly, the operation in which the category to which each PDU session belongs is determined according to the indication information includes the following:
At least one of the traffic type, the QoS type, a QoS flow group, or the transmission method corresponding to each PDU session is determined according to the PDU session category index.

In this embodiment of the present application, the PDU session category index is determined according to the indication information. A PDU session category index corresponds to an application message index. Alternatively, a PDU session category index corresponds to a traffic type. Alternatively, a PDU session category index corresponds to a QoS type. Alternatively, a PDU session category index corresponds to a QoS flow group. Alternatively, a PDU session category index corresponds to a transmission method. The type of the application message, the type of application traffic, or a QoS requirement may be determined according to the index, so that radio resource scheduling strategies such as an adopted radio bearer type and the scheduling priority of a radio resource are determined.

Based on the preceding embodiment of the present application, the indication information includes application message indication information. Accordingly, the operation in which the category to which each PDU session belongs is determined according to the indication information includes the following: The application message to which each PDU session belongs is determined according to the application message indication information; it is determined that each PDU session belongs to the same application message according to the application message indication information in the information frame format of the PDU session; and/or it is determined that transmission of the application message corresponding to each PDU session ends according to the application message indication information in the information frame format of each PDU session.

FIG. 2 is a flowchart of a quality of service flow transmission method according to an embodiment of the present application. This embodiment of the present application is applied to the case where the application message to which a protocol data unit session belongs is determined. Referring to FIG. 2, the method is executed by a quality of service flow transmission apparatus according to this embodiment of the present application. The apparatus is implemented by software and/or hardware and is generally integrated in a base station. Referring to FIG. 2, the method according to this embodiment of the present application includes the following:
In 110, at least one PDU session sent by the core network is acquired. The information frame format of the PDU session carries application message indication information.

The core network may be a component of a communication network and be responsible for associating data and enabling data routing exchange. The protocol data unit session may be a data unit session transmitted between peer levels. At different levels of the communication network, the protocol data unit session may be different. For example, the PDU session at a data link layer is a data frame session, the PDU session at a network layer is a data packet session, and the PDU session at a transmission layer is a data segment session. The application message indication information is information for indicating the application message to which the PDU session belongs, and the application message may be indicated implicitly or explicitly.

In this embodiment of the present application, the core network sends multiple PDU sessions to the base station. The information frame format of each PDU session carries the application message indication information.

In 120, the application message to which each PDU session belongs is determined according to the application message indication information.

A respective application message corresponding to each PDU is determined according to the application message indication information in the PDU session. Different application message indication information may correspond to different application messages.

In this embodiment of the present application, the PDU session carrying application message indication information which is in multiple information frame formats and sent by the core network is acquired. The corresponding application message is determined for each PDU session according to the respective application message indication information. The application message corresponding to each PDU session is determined through the application message indication information. In this manner, the accuracy of quality of service flow transmission can be enhanced, the problem of an information transmission error caused because the category and source of an application message cannot be identified can be reduced, the integrity of an application message can be enhanced, and the user experience can be improved.

Based on the preceding embodiments of the present application, the application message indication information includes at least one of an application message sequence number, an application message end mark, or an application message segment number indication.

In this embodiment of the present application, the information frame format of the PDU session may include at least one of an application message sequence number, an application message end mark, or an application message segment number indication. Different values may be used in the information frame format to identify different application message sequence numbers, application message end marks, or application message segment number indications.

The application message segment number indicates the number of application message segments or identifies which segment is the current PDU session in the corresponding application message or how many remaining segments are not transmitted.

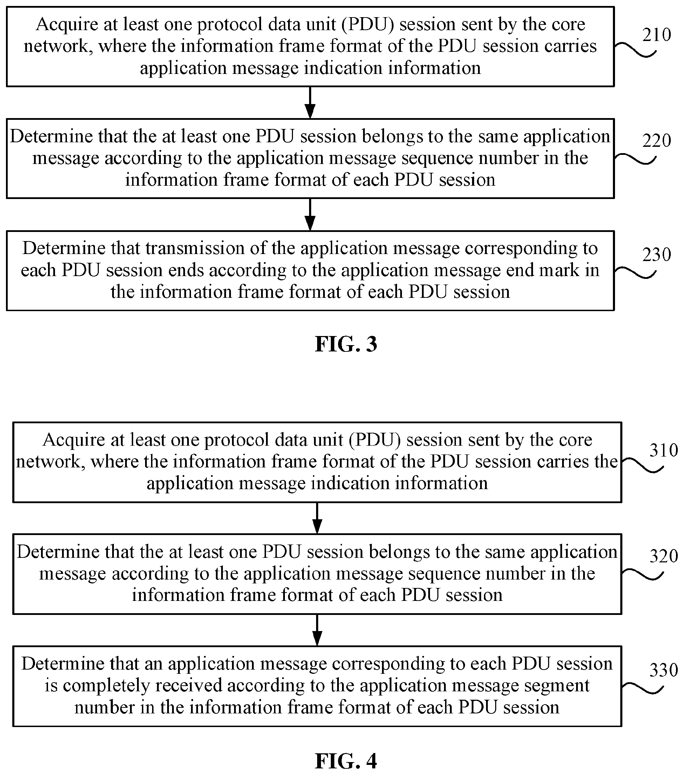

FIG. 3 is a flowchart of another quality of service flow transmission method according to an embodiment of the present application. This embodiment of the present application is described on the basis of the preceding embodiments of the present application. Referring to FIG. 3, the method according to this embodiment of the present application includes the following:
In 210, at least one PDU session sent by the core network is acquired. The information frame format of the at least one PDU session carries application message indication information.
In 220, it is determined that the at least one PDU session belongs to the same application message according to the application message sequence number in the information frame format of each PDU session.

In this embodiment of the present application, the application message sequence number in the information frame format of each PDU session may be extracted, and the application message to which each PDU session belongs is determined according to the value of the application message sequence number. PDU sessions having the same application message sequence number may belong to the same application message.

In 230, it is determined that transmission of an application message corresponding to each PDU session ends according to the application message end mark in the information frame format of each PDU session.

It is determined whether there is an application message end mark in the information frame format of each PDU session. If the application message end mark exists, this PDU session is identified as the end of the application message, and when the PDU session is received, it represents that the transmission of the application message ends. The next PDU session may belong to a new application message.

Based on the preceding embodiments of the present application, the application message indication information includes at least one of an application message sequence number or application message segment number.

In this embodiment of the present application, the information frame format of the PDU session may include at least one of an application message sequence number or an application message segment number. Different values may be used in the information frame format to identify different application message sequence numbers and application message segment numbers.

FIG. 4 is a flowchart of another quality of service flow transmission method according to an embodiment of the present application. This embodiment of the present application is described on the basis of the preceding embodiments of the present application. Referring to FIG. 4, the method according to this embodiment of the present application includes the following:
In 310, at least one PDU session sent by the core network is acquired. The information frame format of the at least one PDU session carries application message indication information.
In 320, it is determined that the at least one PDU session belongs to the same application message according to the application message sequence number in the information frame format of each PDU session.

In 330, it is determined that an application message corresponding to each PDU session is completely received according to the application message segment number in the information frame format of each PDU session.

The application message segment number may represent the number of PDU sessions that an application message is divided into.

In this embodiment of the present application, the application message segment number may be extracted from the information frame format of each PDU session, and it is determined whether the number of received PDU sessions satisfies the application message segment number. If the number of received PDU sessions satisfies the application message segment number, an application message is completely received. Otherwise, the reception of PDU sessions is continued.

Based on the preceding embodiments of the present application, the application message indication information includes at least one of an application message start mark or an application message end mark.

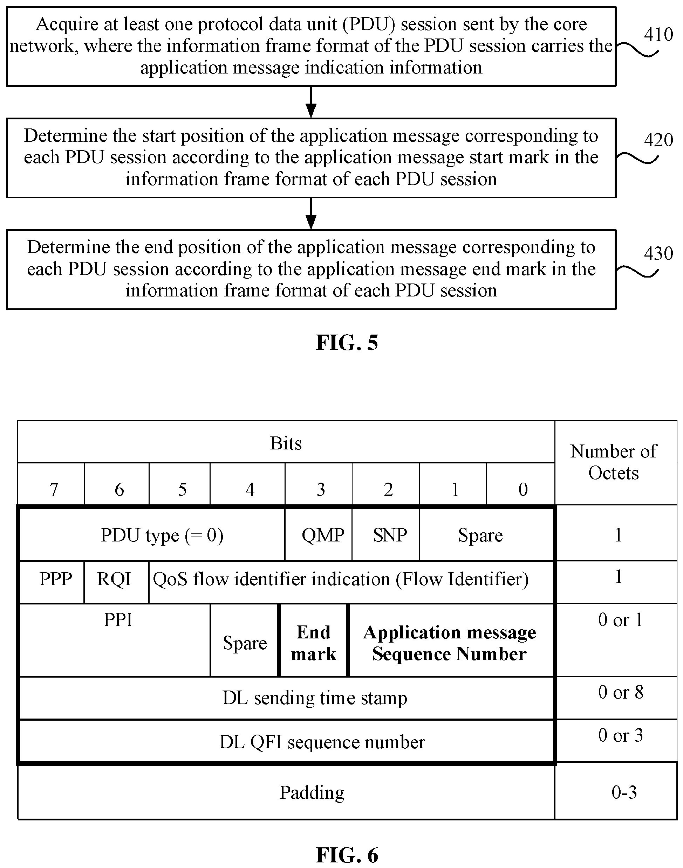

FIG. 5 is a flowchart of another quality of service flow transmission method according to an embodiment of the present application. This embodiment of the present application is described on the basis of the preceding embodiments of the present application. Referring to FIG. 5, the method according to this embodiment of the present application includes the following:
In 410, at least one PDU session sent by the core network is acquired. The information frame format of the at least one PDU session carries application message indication information.
In 420, the start position of the application message corresponding to each PDU session is determined according to the application message start mark in the information frame format of each PDU session.

In this embodiment of the present application, information may be extracted at the position of the application message start mark in the information frame format of the PDU session, and whether a PDU session is at the start position of the application message is determined according to the extracted information. For example, when the application message start mark in the information frame format of a PDU session is 1, the PDU session is at the start position of the application message. If the application message start mark is 0, the PDU session is not at the start position of the application message.

In 430, the end position of the application message corresponding to each PDU session is determined according to the application message end mark in the information frame format of each PDU session.

In this embodiment of the present application, information may be extracted at the position of the application message end mark in the information frame format of the PDU session, and whether a PDU session is at the end position of the application message is determined according to the extracted information. For example, when the application message end mark in the information frame format of a PDU session is 1, the PDU session is at the end position of the application message. If the application message end mark is 0, the PDU session is not at the end position of the application message. PDU sessions belonging to the same application message may be determined through the start position and the end position of the application message. For example, all PDU sessions between the start position and the end position, including the PDU session at the start position and the PDU session at the end position, belong to the same application message.

In an embodiment, referring to FIG. 6, the information frame format of the PDU session carries at least one of an application message sequence number or an application message end mark. The application message sequence number is used by the base station for identifying whether PDUs correspond to the same application message. Under the same QoS flow, PDUs of the same sequence number correspond to the same application message, and PDUs of different sequence numbers correspond to different application messages. The application message end mark is used for indicating the last one of PDUs corresponding to the same application message.

The base station may determine whether PDUs of a new application message start and whether different PDUs correspond to the same application message based on the application message sequence number. The base station determines whether the transmission of PDUs of an application message ends based on the application message end mark. The end mark having the value of 1 indicates that the transmission ends.

From the start of the PDUs of a new application message to the end of the transmission of PDUs of the application message, PDUs of the same application message sequence number under the same QoS flow correspond to a complete application message.

Alternatively, whether the application message sequence number of the current PDU is the same as the application message sequence number of the next PDU may also be used for identifying whether the application message corresponding to the current PDU ends. If the transmission of a new application message starts, it implicitly represents that the transmission of the previous application message ends. At this time, the application message end mark is not required.

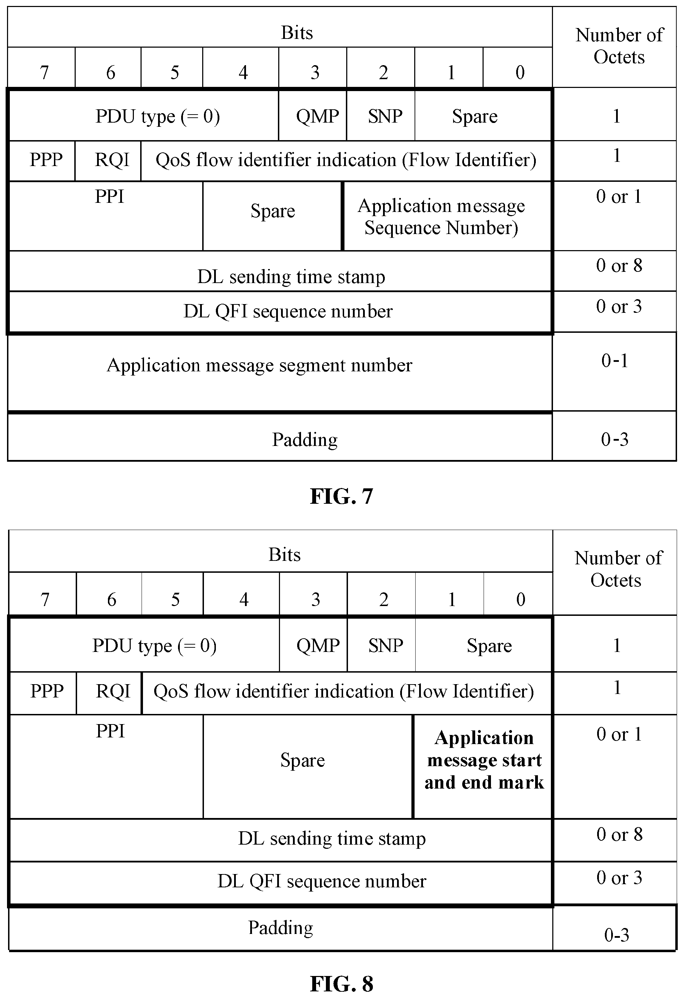

In another exemplary embodiment, referring to FIG. 7, the information frame format of the PDU session carries at least one of an application message sequence number or an application message segment number. In the information frame format, when the application message segment number exists, the number of octets for padding is 0 to 2. It should be noted that when the application message segment number does not exist, the number of octets for padding is 0 to 3.

The application message sequence number is used by the base station for identifying whether PDUs correspond to the same application message. Under the same QoS flow, PDUs of the same sequence number correspond to the same application message, and PDUs having different sequence numbers correspond to different application messages. The application message segment number is used for indicating how many PDUs is the application message divided into for transmission.

The base station may determine whether PDUs of a new application message start and whether different PDUs correspond to the same application message based on the application message sequence number. The base station may determine whether PDUs of an application message are completely received based on the application message segment number.

Starting from the PDUs of a new application message, if the number of PDUs which have the same application message sequence number and are received by the base station under the same QoS flow reaches the application message segment number, it is considered that the application message is received completely. PDUs of the same application message sequence number correspond to a complete application message.

In an embodiment, referring to FIG. 8, the information frame format of the PDU session carries at least one of an application message start mark or an application message end mark. The mark bit may occupy 2 bits. Four values respectively represent at least one of the following: The mark bit does not exist, the transmission of an application message starts, the transmission of an application message ends, or an application message has only one PDU.

For example, when the 2 bits are '00', it represents that the mark bit does not exist (does not indicate the start and end of the application message). The start and end of the application message cannot be determined. Alternatively, an application message corresponds to a PDU by default. When the 2 bits are '01', it represents that transmission of an application message starts. When the 2 bits are '10', it represents that transmission of an application message ends. When the 2 bits are '11', it represents that an application message has only one PDU. In this manner, from the start of the transmission of an application message to the end of the transmission of the application message, all PDUs under the same QoS flow correspond to the same application message.

The mark bit may occupy 1 bit. When this 1 bit is 1, it represents that transmission of the application message under the same QoS flow starts (start mark) or ends (end mark) (a new start is the old end).

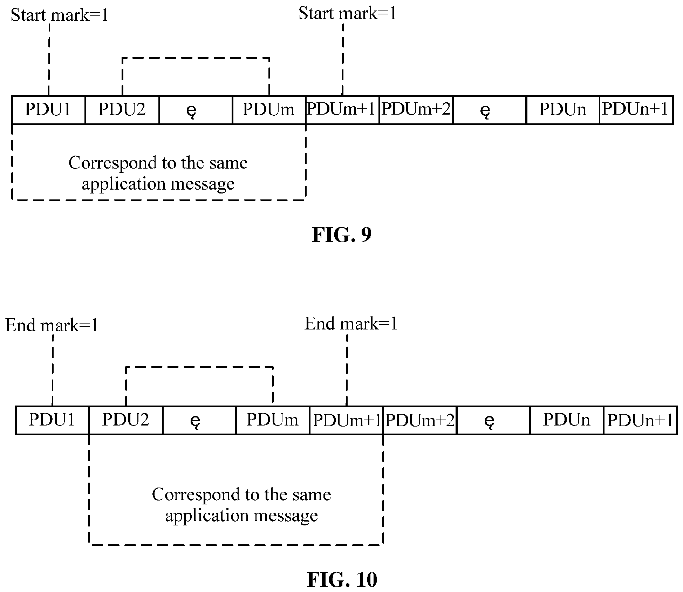

For example, the value of the 1 bit is 1, which represents the start of transmission of an application message (start mark). All PDUs under the same QoS flow correspond to one application message until 1 bit is 1. FIG. 9 is a diagram illustrating transmission of a PDU session according to an embodiment of the present application. As shown in FIG. 9, StartMark = 1 occurs once in PDU1, and the last occurrence of StartMark = 1 is PDU m+1. Then, PDU1, PDU2 ... and PDU m correspond to the same application message.

Alternatively, the value of the 1 bit is 1, which represents the end of transmission of an application message (end mark). This PDU and the previous contiguous PDUs with End mark = 0 under the same QoS flow correspond to an application message. FIG. 10 is a diagram illustrating another transmission of a PDU session according to an embodiment of the present application. As shown in FIG. 10, StartMark = 1 occurs once in PDU m+1. The PDU m+1 and previous contiguous PDUs (PDU2 ... and PDU m) with End mark = 0 correspond to an application message.

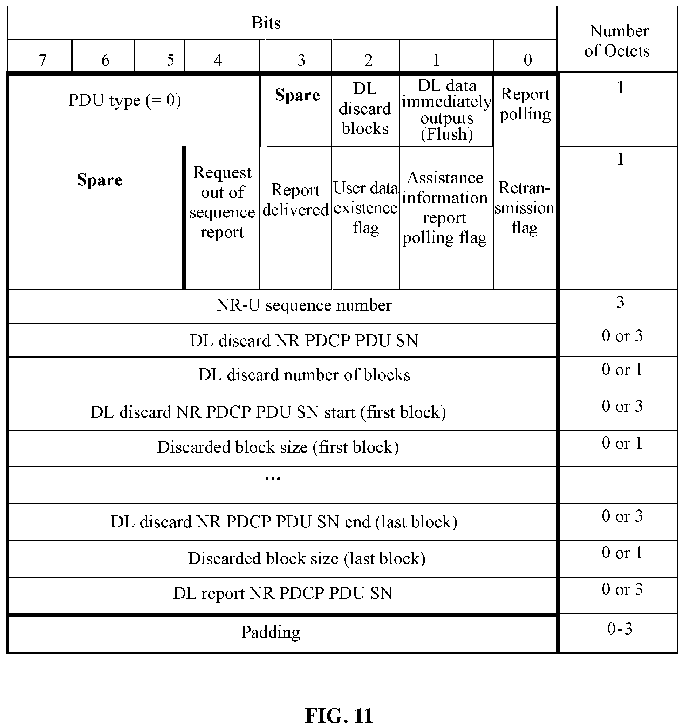

Referring to FIG. 11, the method described above is also applicable to the application message determination inside a radio access network (RAN) (X2-U, Xn-U, and F1-U user plane interfaces). The frame format of the PDU session inside the RAN (X2-U, Xn-U, and F1-U user plane interfaces) is as follows: A spare bit in the frame format may be extended to one of the preceding meanings to represent which PDUs belong to the same application message.

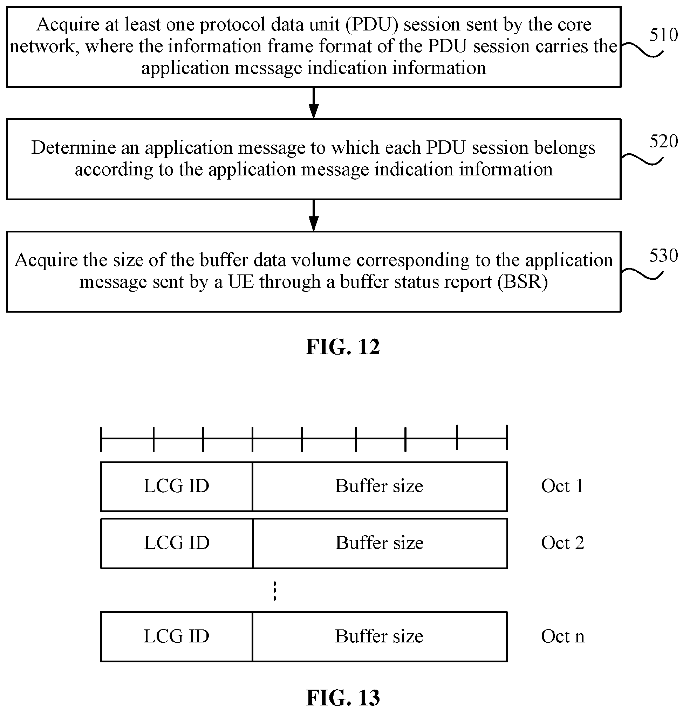

FIG. 12 is a flowchart of a quality of service flow transmission method according to an embodiment of the present application. This embodiment of the present application is described on the basis of the preceding embodiments of the present application. Referring to FIG. 12, the method according to this embodiment of the present application includes the following:
In 510, at least one PDU session sent by the core network is acquired. The information frame format of the PDU session carries application message indication information.
In 520, the application message to which each PDU session belongs is determined according to the application message indication information.
In 530, the size of the buffer data volume corresponding to the application message sent by a UE through a buffer status report (BSR) is acquired.

In this embodiment of the present application, due to the limitation of radio resources and UE capabilities, an uplink application message may be segmented at Uu interface. The base station maps the QoS flow to a data radio bearer (DRB) and a logical channel group (LCG) through radio bearer configuration. The UE requests a radio resource (buffer status report (BSR)) based on the LCG. The base station performs uplink resource scheduling based on the BSR. When the UE requests the radio resource (BSR) based on the LCG, the sum of the buffer size corresponding to the LCG is requested, and the number of application messages included in the buffer size is not distinguished.

The base station may receive the size of the buffer data volume corresponding to the application message sent by the UE through the BSR and may determine the number of feedback application messages through the size of the buffer data volume. The number of BSRs reported by the UE may be one or more.

Based on the preceding embodiments of the present application, the size of the buffer data volume corresponding to the application message includes the size of the application message reported according to a logical channel group.

In this embodiment of the present application, the size of the buffer data volume of the application message sent by the UE may be the size of the application message reported according to the logical channel group.

Based on the preceding embodiments of the present application, the size of the buffer data volume corresponding to the application message includes the size of the application message reported according to a logical channel.

In this embodiment of the present application, the size of the buffer data volume of the application message sent by the UE may be the size of the application message reported according to the logical channel.

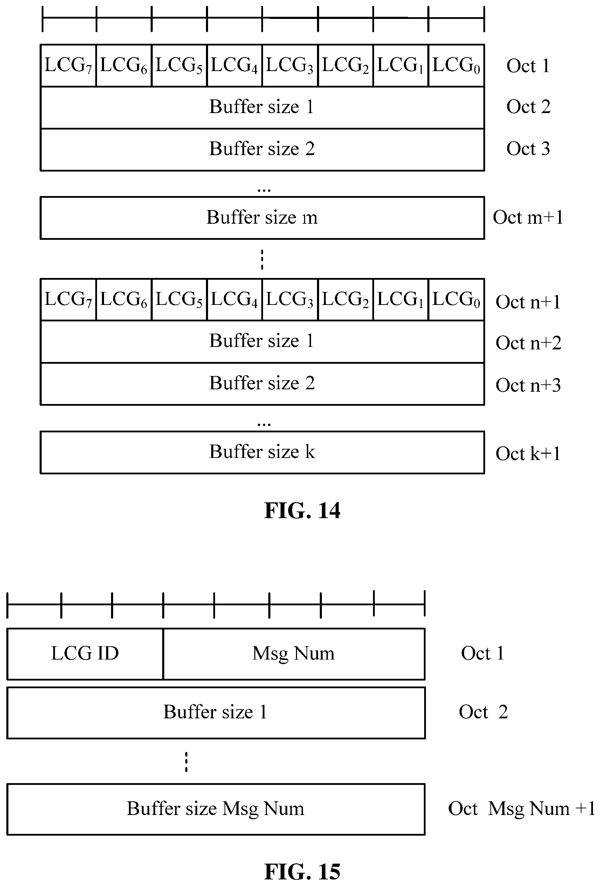

In an exemplary embodiment, an application message may correspond to the size of a buffer data volume. Referring to FIGS. 13 and 14, the base station may request a BSR according to the application message. An application message corresponds to a buffer size (message size). If the buffer corresponding to the same LCG includes multiple application messages, the correspondence between LCGs and buffer sizes is reported. The base station schedules an uplink radio resource based on the buffer size. The UE transmits uplink data on the corresponding radio resource. In this manner, the base station may determine whether an application message is completely received.

In an exemplary embodiment, referring to FIG. 15, the base station requests a BSR according to the application message. An application message corresponds to a buffer size (message size). A BSR includes an LCG ID, an MsgNum field, and an MsgNum of buffer size fields.

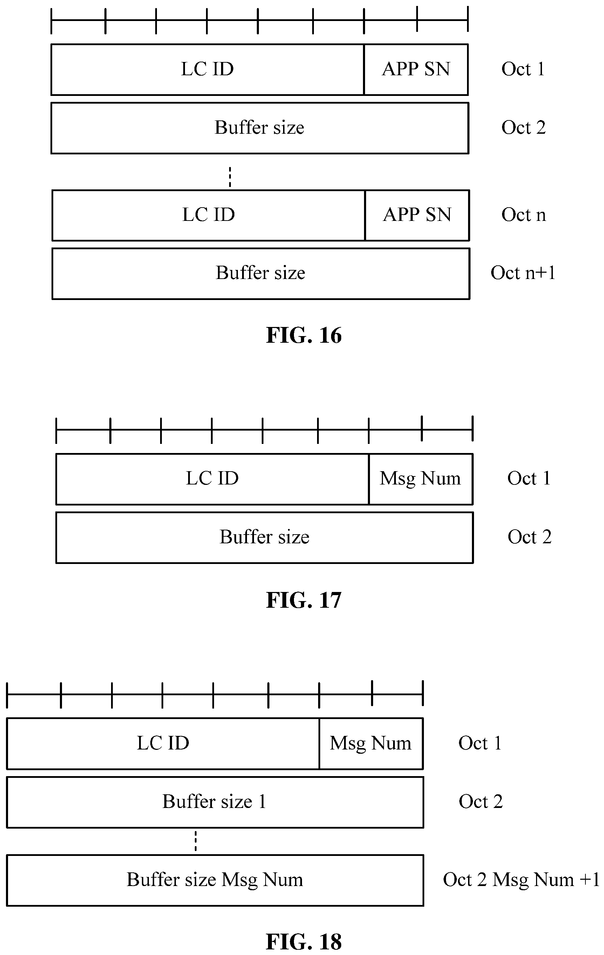

In an embodiment, referring to FIGS. 16, 17, and 18, an application message corresponds to a QoS flow. A QoS flow corresponds to a logical channel. The UE may request a BSR according to an LC identifier (ID), so that an LC-level BSR request may be implemented. In addition, the BSR carries the application message sequence number, and the application message sequence number may be used by the base station for identifying which PDUs correspond to the same application message; the BSR carries time stamp information of the application message reaching a UE buffer, and the time stamp information may be used by the base station for determining a resource allocation priority when resources are congested. In FIG. 16, the base station reports the buffer size and application message sequence number corresponding to each application message according to the LC ID. In FIG. 17, the base station reports the message quantity and message size corresponding to one LC ID. The message size may be the total size of multiple messages. In FIG. 18, the base station requests a BSR according to the application message. An application message corresponds to a buffer size (message size). ABSR includes an LC ID, an MsgNum field, and an MsgNum of buffer size fields.

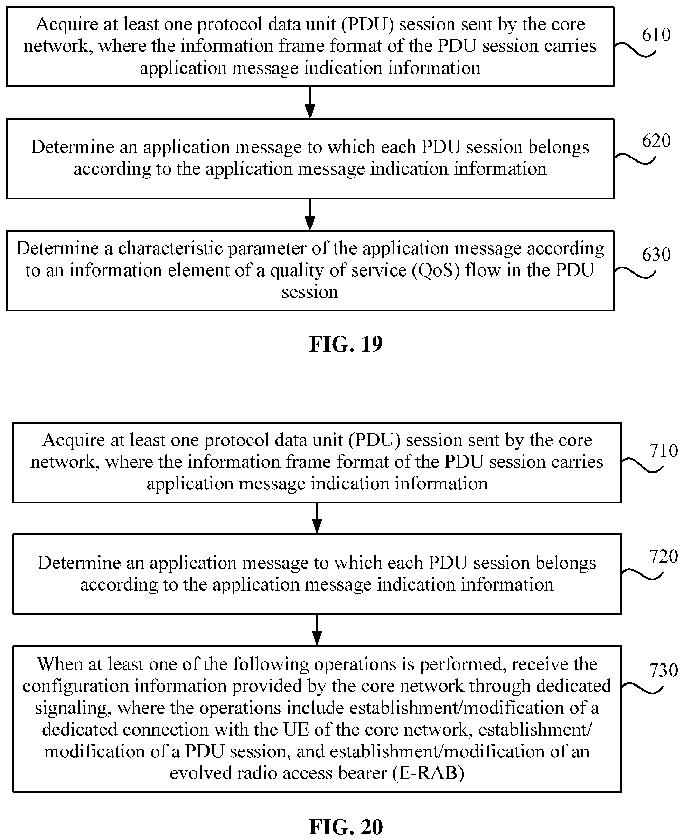

FIG. 19 is a flowchart of another quality of service flow transmission method according to an embodiment of the present application. This embodiment of the present application is described on the basis of the preceding embodiments of the present application. Referring to FIG. 19, the method according to this embodiment of the present application includes the following:
In 610, at least one PDU session sent by the core network is acquired. The information frame format of the PDU session carries application message indication information.
In 620, the application message to which each PDU session belongs is determined according to the application message indication information.
In 630, a characteristic parameter of the application message is determined according to an information element of a Qos flow in the PDU session. The characteristic parameter of the corresponding application message may be determined through the information element of the Qos flow included in the PDU session.

Based on the preceding embodiment of the present application, the characteristic parameter includes at least one of the following: an application availability target, an application reliability target, a video traffic coding rate, video traffic transmission duration, or a transmission video scale.

In an exemplary embodiment, the base station may identify the availability target and the reliability target in the application message. The core network provides the base station with the characteristic parameter of the application message through the information element in the QoS flow. The characteristic parameter of the application message includes at least one of the following: the application message availability target, the application message reliability target, the video traffic coding rate, the video traffic transmission duration, or the total size of a video.

FIG. 20 is a flowchart of another quality of service flow transmission method according to an embodiment of the present application. This embodiment of the present application is described on the basis of the preceding embodiments of the present application. Referring to FIG. 20, the method according to this embodiment of the present application includes the following:
In 710, at least one PDU session sent by the core network is acquired. The information frame format of the PDU session carries application message indication information.
In 720, an application message to which each PDU session belongs is determined according to the application message indication information.
In 730, when at least one of the following operations is performed, configuration information provided by the core network through dedicated signaling is received, and the operations include establishing/modifying a dedicated connection with a UE of the core network, establishing/modifying a PDU session with a UE of the core network, and establishing/modifying an evolved radio access bearer (E-RAB) with a UE of the core network.

In this embodiment of the present application, the core network may provide the configuration information operated in the base station through the dedicated information. The operations performed by the base station may include one or more of the following: establishment/modification of the dedicated connection with the UE of the core network, establishment/modification of the PDU session with the UE of the core network, and establishment/modification of the E-RAB with the UE of the core network.

Based on the preceding embodiments of the present application, the configuration information includes at least one of the following: a UE traffic bearer maximum rate requirement, a UE traffic bearer delay requirement, a UE traffic bearer transmission frequency, a UE bearer traffic data volume, UE power consumption information, UE battery charge information, or UE mobility prediction information.

Based on the preceding embodiments of the present application, the UE mobility prediction information includes at least one of the following: historical cell information, historical cell camping duration, camping duration of the current cell, a camping start time point of the current cell, a radio resource control (RRC) connection release interval, an RRC connection suspension interval, a traffic interval, or a traffic frequency.

In an exemplary embodiment, the base station may identify the characteristic information of a UE. During the establishment/modification (initial context setup request, UE context modification request, handover request, and path switch request acknowledge) of the dedicated connection (NG interface application protocol (NGAP)/S1 interface application protocol (S1AP)) with the UE of the core network, or the establishment/modification of the PDU session (PDU session resource setup request and PDU session resource modify request) with the UE of the core network, or the establishment/modification of the E-RAB with the UE of the core network, the core network provides the base station with at least one of the following through the dedicated signaling: the maximum rate requirement of traffic bore by the UE, a delay requirement of traffic bore by the UE, a transmission frequency of traffic bore by the UE, the data volume size of traffic bore by the UE, UE power consumption information, UE battery charge information (whether a power supply is connected, whether a power supply is passive, or whether there is an energy saving requirement), or UE mobility prediction related information.

The UE mobility prediction related information includes at least one of the following: historical cell information, historical cell camping duration, camping duration or a camping start point of the current cell before the traffic is initiated, an RRC connection release/suspension interval, the traffic interval, or the traffic frequency.

An embodiment of the present application provides a quality of service flow transmission method. The embodiment related to the quality of service flow transmission method is not covered by the claimed invention. This embodiment of the present application may be applied to the case where the category of a protocol data unit session is determined. The method may be executed by a quality of service flow transmission apparatus according to this embodiment of the present application. The apparatus may be performed by software and/or hardware. The method according to this embodiment of the present application includes the following:
In S11, at least one issued PDCP data PDU is received. The PDCP data PDU carries indication information.

In this embodiment of the present application, one or more PDCP data PDUs issued may be received. Each PDCP data PDU may carry indication information. The indication information may be information on a field in an information frame format of a PDU session.

In S12, message receiving feedback is sent according to the indication information.

The manner in which each PDU session sends the message receiving feedback may be determined according to different values of the indication information in the information frame format of each PDCP data PDU. For example, PDCP data PDUs may be divided into different categories according to the indication information in the information frame format of each PDCP data PDU, and the message receiving feedback may be sent for a category of PDCP data PDUs.

Based on the preceding embodiments of the present application, the indication information includes a PDU session category index. Accordingly, the operation in which the message receiving feedback is sent according to the indication information includes the following:
At least one of a traffic type, a QoS type, a QoS flow group, or a transmission method corresponding to each PDCP data PDU is determined according to the PDU session category index. The message receiving feedback is sent according to the at least one of the traffic type, the QoS type, the QoS flow group, or the transmission method.

In this embodiment of the present application, the PDU session category index is determined according to the indication information. A PDU session category index corresponds to an application message index. Alternatively, a PDU session category index corresponds to a traffic type. Alternatively, a PDU session category index corresponds to a QoS type. Alternatively, a PDU session category index corresponds to a QoS flow group. Alternatively, a PDU session category index corresponds to a transmission method. The type of the application message, the type of application traffic, or a QoS requirement may be determined according to the index, so that radio resource scheduling strategies such as an adopted radio bearer type and the scheduling priority of a radio resource are determined.

When the message receiving feedback is sent, the message receiving feedback is sent for different traffic types, QoS types, QoS flow groups, and transmission methods.

Based on the preceding embodiments of the present application, the indication information includes application message indication information. Accordingly, the operation in which the message receiving feedback is sent according to the indication information includes the following: An application message to which each PDCP data PDU belongs is determined according to the application message indication information, and it is determined whether each PDU session belongs to the same application message according to the application message indication information in the information frame format of each PDU session; and/or it is determined that transmission of the application message corresponding to each PDU session ends according to the application message indication information in the information frame format of each PDU session. Moreover, the message receiving feedback is sent according to the application message to which the PDCP data PDU belongs.

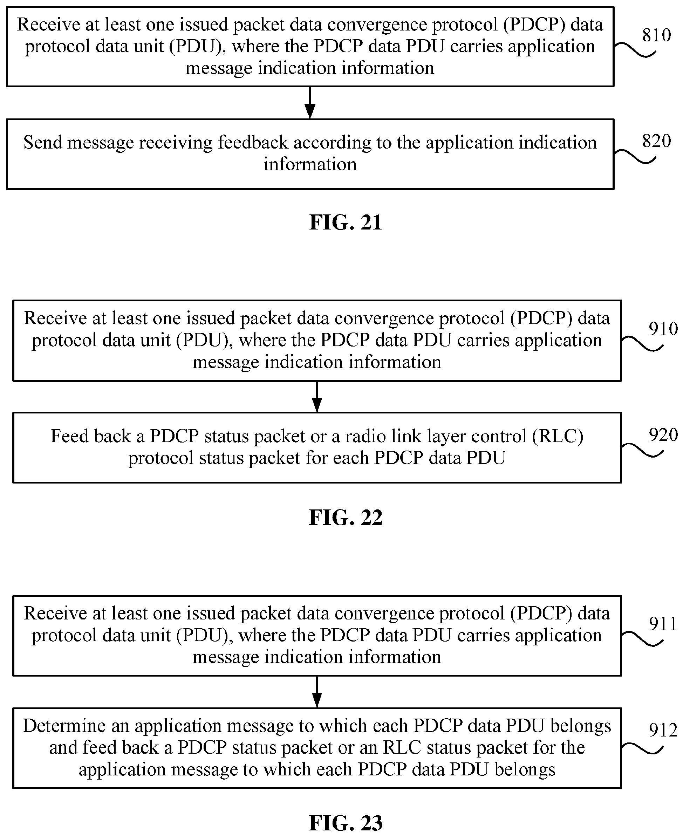

The embodiment related to a quality of service flow transmission method as shown in FIG. 21 is not covered by the claimed invention. FIG. 21 is a flowchart of another quality of service flow transmission method according to an embodiment of the present application. This embodiment of the present application may be applied to the case where the application message to which a protocol data unit session belongs is determined. The method may be executed by a quality of service flow transmission apparatus according to this embodiment of the present application. The apparatus may be implemented by software and/or hardware and may be generally integrated in a terminal or base station. Referring to FIG. 21, the method according to this embodiment of the present application includes the following:
In 810, at least one issued PDCP data PDU is received. The PDCP data PDU carries application message indication information.

The packet data convergence protocol data protocol data unit may be a data unit sent by the base station in a downlink sending process, and the data unit is received by the terminal. Alternatively, the packet data convergence protocol data protocol data unit may be a data unit sent by the terminal in an uplink sending process, and the data unit is received by the base station.

In this embodiment of the present application, the PDCP data PDU carrying the application message indication information may be received. The number of PDCP data PDUs may be one or more.

In 820, message receiving feedback is sent according to the application message indication information.

The application message corresponding to each PDCP data PDU is determined according to the application message indication information, and the message receiving feedback may be generated and sent according to different application messages.

In this embodiment of the present application, at least one issued PDCP Data PDU is received. The PDCP data PDU carries application message indication information. The message receiving feedback is sent according to the application message indication information. In this manner, the integrity of the application message receiving is improved, and the communication quality can be enhanced.

Based on the preceding embodiments of the present application, the method also includes sending at least one PDCP data PDU. The PDCP data PDU carries the application message indication information.

The embodiment related to a quality of service flow transmission method as shown in FIG. 22 is not covered by the claimed invention. FIG. 22 is a flowchart of another quality of service flow transmission method according to an embodiment of the present application. This embodiment of the present application is described on the basis of the preceding embodiments of the present application. Referring to FIG. 22, the method according to this embodiment of the present application includes the following:
In 910, at least one PDCP data PDU issued is received. The PDCP data PDU carries application message indication information.
In 920, a PDCP status packet or a radio link control protocol (RLC) status packet is fed back for each PDCP data PDU.

In this embodiment of the present application, a PDCP status packet or an RLC status packet may be fed back every time a PDCP data PDU is received.

The embodiment related to a quality of service flow transmission method as shown in FIG. 23 is not covered by the claimed invention. FIG. 23 is a flowchart of another quality of service flow transmission method according to an embodiment of the present application. This embodiment of the present application is described on the basis of the preceding embodiments of the present application. Referring to FIG. 23, the method according to this embodiment of the present application includes the following:
In 911, at least one PDCP data PDU issued is received. The PDCP data PDU carries application message indication information.
In 912, the application message to which each PDCP data PDU belongs is determined, and a PDCP status packet or an RLC status packet is fed back for the application message to which each PDCP data PDU belongs.

The application message indication information in each PDCP data PDU may be determined to determine the corresponding application message. A PDCP status packet or an RLC status packet is fed back for each application message.

Based on the preceding embodiments of the present application, the application message to which each PDCP data PDU belongs is determined in the following manner: The application message to which each PDCP data PDU belongs is determined according to the application message indication information carried in the PDCP data PDU.

In this embodiment of the present application, the corresponding application message may be determined through the application message indication carried in the information frame format of the PDCP data PDU.

Based on the preceding embodiments of the present application, the application message indication information includes at least one of an application message sequence number, an application message start mark, an application message end mark, or an application message segment number indication.

Based on the preceding embodiments of the present application, the operation in which the application message to which each PDCP data PDU belongs is determined according to the application message indication information carried in the PDCP data PDU includes at least one of the following manners:
It is determined whether each PDCP data PDU belongs to the same application message according to the application message sequence number in the information frame format of each PDCP data PDU; it is determined that transmission of the application message corresponding to each PDCP data PDU starts according to the application message start mark in the information frame format of each PDCP data PDU; or it is determined that transmission of the application message corresponding to each PDCP data PDU ends according to the application message end mark in the information frame format of each PDCP data PDU.

Based on the preceding embodiments of the present application, the method also includes carrying the application message indication information through a medium access control (MAC) header, an RLC header, and a media access control control element (MAC CE).

Based on the preceding embodiments of the present application, the method also includes receiving the number of PDUs corresponding to the application message and configured by the base station and determining the application message to which each PDCP data PDU belongs according to the number of PDUs.

Based on the preceding embodiments of the present application, the number of PDUs corresponding to the application message is carried by at least one of an RRC message, a PDCP header, MAC, an RLC header, or an MAC CE.

In an exemplary embodiment, due to the factors such as the limitation of radio resources and the limitation of UE capabilities, after the base station receives downlink PDUs of the same application message, the base station may perform segment transmission at Uu interface. Only if all Uu interface segments of the same application message are successfully transmitted, the application message is considered to be successfully transmitted. Scheduling of the base station needs to ensure that the same application message is successfully transmitted with the survival time. Whether a downlink message is successfully transmitted requires feedback from the UE. In the determination of whether the downlink survival time is satisfied, there are the following methods: a determination mechanism based on PDCP status packet feedback (sequence number (SN)), a determination mechanism based on a hybrid automatic repeat request (hybrid automatic repeat request acknowledgement/non-acknowledgement (HARQ ACK/NACK)) feedback, and a determination mechanism based on automatic repeat request acknowledgement/non-acknowledgement (ARQ ACK/NACK) feedback.

If the determination mechanism is based on the ARQ ACK/NACK feedback, since the ARQ ACK/NACK feedback is relatively timely, there will be feedback as long as a data packet error occurs. A sender may determine in real time whether PDUs corresponding to the same application message are successfully transmitted.

If the determination mechanism is based on the PDCP status packet feedback (SN) or based on the HARQ ACK/NACK feedback, the UE does not feed back a status packet for each PDU. As a result, the sender cannot determine timely whether PDUs corresponding to the same application message are successfully transmitted, thereby affecting the determination of whether the survival time is satisfied.

The solutions are below.

Method one: Each time a PDU is received, the UE feeds back a PDCP status packet or an RLC status packet.

Method two: The UE perceives which PDUs correspond to an application message and feeds back a PDCP status packet or an RLC status packet after the same application message is successfully received.

Method one may occupy more radio resources due to frequent feedback of status packet information. Thus, the present method mainly focuses on how the UE perceives which PDUs correspond to an application message.

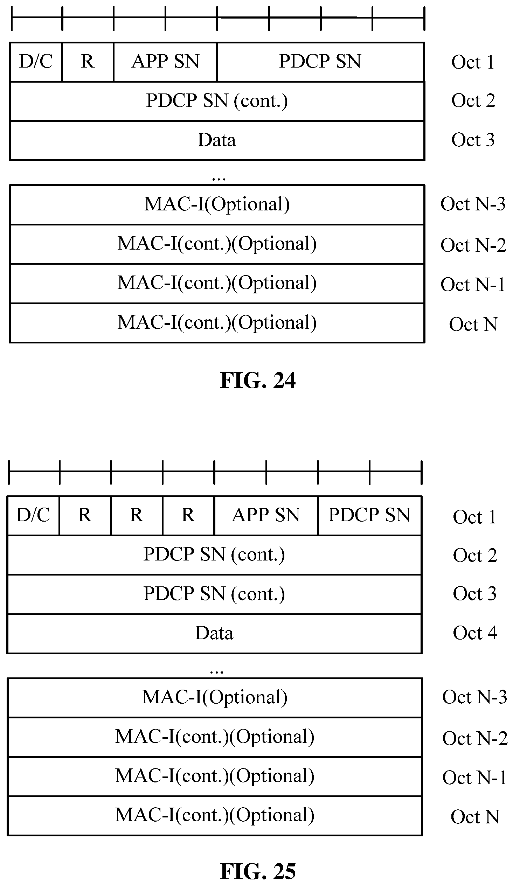

In an exemplary embodiment, a PDCP data PDU format having a 12-bit PDCP SN and an application message sequence number may be shown in FIG. 24. A PDCP data PDU format of a DRB has an 18-bit PDCP SN and an application message sequence number and may be shown in FIG. 25. Referring to FIGS. 24 and 25, the application message sequence number is used by the base station for identifying whether PDUs correspond to the same application message. PDUs of the same sequence number under the same QoS flow correspond to the same application message. PDUs having different sequence numbers correspond to different application messages. The application message end mark is used for indicating the last one of PDUs corresponding to the same application message.

The base station may determine whether PDUs of a new application message start and whether different PDUs correspond to the same application message based on the application message sequence number. From the start of the PDUs of a new application message to the end of the transmission of the PDUs of an application message, the PDUs of the same application message sequence number under the same QoS flow correspond to a complete application message.

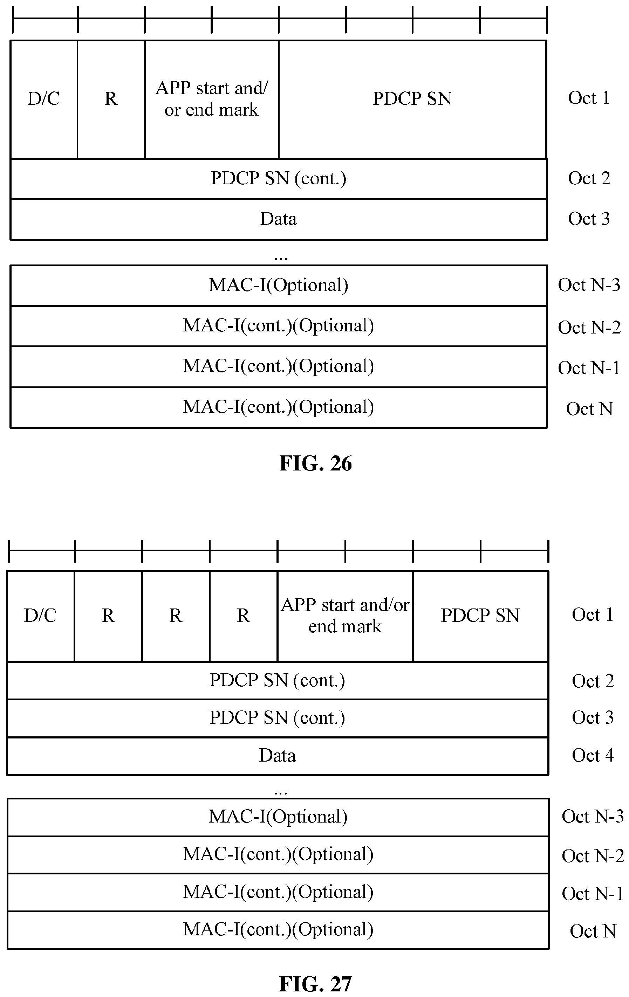

In another exemplary embodiment, the PDCP data PDU format having a 12-bit PDCP SN and an application message start/end mark may be shown in FIG. 26. The PDCP data PDU format of a DRB has an 18-bit PDCP SN and an application message start/end mark and may be shown in FIG. 27. In FIGS. 26 and 27, the application message start and end marks indicate the start or end of the application message, respectively. The mark bit may occupy 2 bits. Four values respectively represent at least one of the following: The mark bit does not exist, transmission of an application message starts, transmission of an application message ends, or an application message has only one PDU.

For example, when the 2 bits are '00', it represents that the mark bit does not exist (does not indicate the start and end of the application message). The start and end of the application message cannot be determined. Alternatively, an application message corresponds to a PDU by default.

When the 2 bits are '01', it represents that transmission of an application message starts. When the 2 bits are '10', it represents that transmission of an application message ends. When the 2 bits are '11', it represents that an application message has only one PDU. In this manner, from the start of the transmission of the application message to the end of the transmission of the application message, all PDUs correspond to the same application message.

The mark bit may also occupy 1 bit. When the value of this bit is 1, it represents that the transmission of the application message starts (start mark) or ends (end mark) (the new start is the old end).

For example, the value of the 1 bit is 1, which represents the start of transmission of an application message (start mark). All PDUs correspond to one application message until the 1 bit is 1. Referring to FIG. 9, StartMark = 1 occurs once in PDU1, and the last occurrence of StartMark = 1 is in PDU m+1. Then, PDU1, PDU2 ... and PDU m correspond to the same application message.

Alternatively, the value of the 1 bit is 1, which represents the end (end mark) of transmission of an application message. This PDU and previous contiguous PDUs of End mark = 0 correspond to an application message. Referring to FIG. 10, StartMark = 1 occurs once in PDU m+1. The PDU m+1 and the previous contiguous PDUs (PDU2 ... and PDU m) with End mark = 0 correspond to an application message.

The preceding information may also be carried by an MAC header, an RLC header, and an MAC CE. In addition, the base station may configure the UE with the number of PDUs corresponding to an application message. The UE determines whether the application message is successfully received based on the number of PDUs corresponding to the application message and whether the number of received PDUs of the application message reaches the number. The number of PDUs corresponding to an application message may be carried by an RRC message, a PDCP header, an MAC header, an RLC header, and an MAC CE.

When the preceding method is used, the UE requires to report the capability of application message identification, and the base station configures a status report reporting indication based on the application message for the UE.

Only when the UE supports the capability of application message identification, the base station can configure the status report reporting indication based on the application message for the UE.

When the UE receives the status report reporting indication based on the application message, and the UE successfully receives all PDUs corresponding to an application message, the UE triggers a PDCP status packet or an RLC status packet once.

In an embodiment, a quality of service flow transmission apparatus executes the quality of service flow transmission method provided by any embodiment of the present application and has functional modules and beneficial effects corresponding to the method executed. The apparatus is performed by software and/or hardware. The apparatus includes a session transmission module and a category determination module.

The session transmission module is configured to acquire at least one protocol data unit (PDU) session sent by the core network. The information frame format of the PDU session carries indication information.

The category determination module is configured to determine the category to which each PDU session belongs according to the indication information.

In an embodiment, a quality of service flow transmission apparatus executes the quality of service flow transmission method provided by any embodiment of the present application and has functional modules and effects corresponding to the method executed. The apparatus is performed by software and/or hardware. The apparatus includes an index acquisition module and a type identification module.

The index acquisition module is configured to acquire at least one protocol data unit (PDU) session sent by the core network. The information frame format of the PDU session carries a PDU session category index.

The type identification module is configured to determine at least one of a traffic type, the QoS type, the QoS flow group, or the transmission method corresponding to each PDU session according to the PDU session category index.

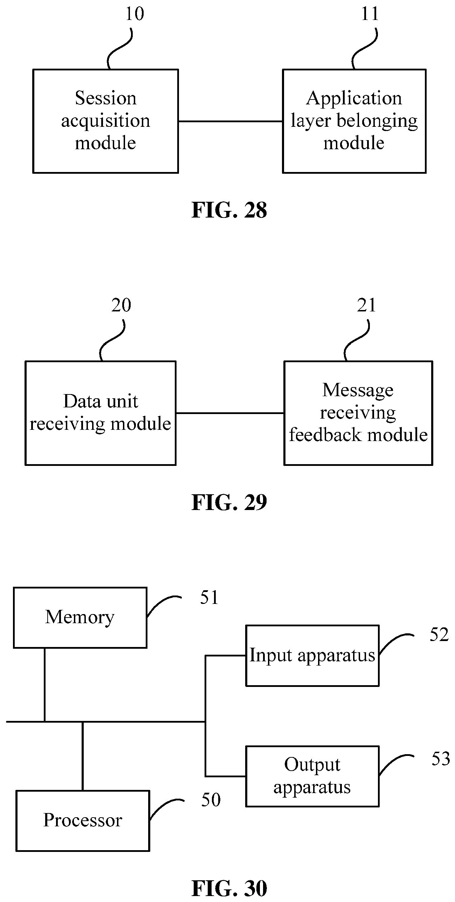

FIG. 28 is a diagram illustrating the structure of a quality of service flow transmission apparatus according to an embodiment of the present application. The apparatus executes the quality of service flow transmission method provided by any embodiment of the present application and has functional modules and effects corresponding to the method executed. The apparatus is performed by software and/or hardware. The apparatus includes a session acquisition module 10 and an application layer belonging module 11.

The session acquisition module 10 is configured to acquire at least one protocol data unit (PDU) session sent by a core network. An information frame format of the PDU session carries application message indication information. The application layer belonging module 11 is configured to determine an application message to which each PDU session belongs according to the application message indication information.

In this embodiment of the present application, the PDU session carrying application message indication information in multiple information frame formats sent by the core network is acquired by the session acquisition module 10. The application layer belonging module 11 determines the corresponding application message for each PDU session according to the respective application message indication information. The application message corresponding to each PDU session is determined through the application message indication information. In this manner, the accuracy of quality of service flow transmission can be enhanced, the problem of an information transmission error caused because the category and source of an application message cannot be identified, the integrity of an application message can be enhanced, and the user experience can be improved.

Based on the preceding embodiments of the present application, the application message indication information in the apparatus includes at least one of an application message sequence number, an application message end mark, or an application message segment number indication.

Based on the preceding embodiments of the present application, the application layer belonging module 11 includes a first same belonging unit and a first message end unit.

The first same belonging unit is configured to determine that at least one PDU session belongs to the same application message according to the application message sequence number in the information frame format of each PDU session.

The first message end unit is configured to determine that transmission of the application message corresponding to each PDU session ends according to the application message end mark in the information frame format of each PDU session.

Based on the preceding embodiments of the present application, the application message indication information in the apparatus includes at least one of an application message sequence number or an application message segment number.

Based on the preceding embodiment of the present application, the application layer belonging module 11 includes a second same belonging unit and a second message end unit.

The second same belonging unit is configured to determine that at least one PDU session belongs to the same application message according to the application message sequence number in the information frame format of each PDU session.

The second message end unit is configured to determine that the application message corresponding to each PDU session is completely received according to the application message segment number in the information frame format of each PDU session.

Based on the preceding embodiments of the present application, the application message indication information in the apparatus includes at least one of an application message start mark or an application message end mark.

A start position unit is configured to determine the start position of the application message corresponding to each PDU session according to the application message start mark in the information frame format of each PDU session.

An end position unit is configured to determine the end position of the application message corresponding to each PDU session according to the application message end mark in the information frame format of each PDU session.

Based on the preceding embodiments of the present application, the apparatus also includes a buffer report module.

The buffer report module is configured to acquire the size of the buffer data volume corresponding to the application message sent by the UE through a buffer status report (BSR).

Based on the preceding embodiments of the present application, the size of the buffer data volume corresponding to the application message in the buffer report module includes the size of the application message reported according to a logical channel group.

Based on the preceding embodiment of the present application, the size of the buffer data volume corresponding to the application message in the buffer report module includes the size of the application message reported according to a logical channel.

Based on the preceding embodiments of the present application, the apparatus also includes a characteristic parameter module.

The characteristic parameter module is configured to determine a characteristic parameter of the application message according to an information element of a Qos flow in the PDU session.

Based on the preceding embodiments of the present application, the characteristic parameter in the characteristic parameter module includes at least one of the following: an application availability target, an application reliability target, a video traffic coding rate, video traffic transmission duration, or a transmission video scale.

Based on the preceding embodiment of the present application, the apparatus also includes an operation configuration module.

The operation configuration module is configured to, when at least one of the following operations is performed, receive configuration information provided by the core network through dedicated signaling. The operations include establishment/modification of a dedicated connection with the UE of the core network, establishment/modification of a PDU session with the UE of the core network, and establishment/modification of an evolved radio access bearer (E-RAB) with the UE of the core network.

Based on the preceding embodiments of the present application, the configuration information in the operation configuration module includes at least one of a UE traffic bearer maximum rate requirement, a UE traffic bearer delay requirement, a UE traffic bearer transmission frequency, a UE bearer traffic data volume, UE power consumption information, UE battery charge information, or UE mobility prediction information.

Based on the preceding embodiments of the present application, the UE mobility prediction information in the configuration information of the operation configuration module includes at least one of the following: historical cell information, historical cell camping duration, camping duration of the current cell, a camping start time point of the current cell, a radio resource control (RRC) connection release interval, an RRC connection suspension interval, a traffic interval, or a traffic frequency.

In an exemplary embodiment, a quality of service flow transmission apparatus executes the quality of service flow transmission method provided by any embodiment of the present application and has functional modules and beneficial effects corresponding to the method executed. The apparatus is performed by software and/or hardware. The apparatus includes an indication receiving module and a feedback sending module.

The indication receiving module is configured to receive at least one issued packet data convergence protocol (PDCP) data protocol data unit (PDU). The PDCP data PDU carries indication information.

The feedback sending module is configured to send message receiving feedback according to the indication information.

In an exemplary embodiment, a quality of service flow transmission apparatus may execute the quality of service flow transmission method provided by any embodiment of the present application and has functional modules and effects corresponding to the method executed. The apparatus may be performed by software and/or hardware. The apparatus includes an index receiving module and an index feedback sending module.

The index receiving module is configured to receive at least one issued packet data convergence protocol (PDCP) data protocol data unit (PDU). The PDCP data PDU carries a PDU session category index.

The index feedback sending module is configured to determine at least one of the traffic type, the quality of service (QoS) type, the QoS flow group, or the transmission method corresponding to each PDCP data session according to the PDU session category index and send the message receiving feedback according to at least one of the traffic type, the QoS type, the QoS flow group, or the transmission method.

The embodiment related to a quality of service flow transmission apparatus as shown in FIG. 29 is not covered by the claimed invention. FIG. 29 is a diagram illustrating the structure of another quality of service flow transmission apparatus according to an embodiment of the present application. The apparatus may execute the quality of service flow transmission method provided by any embodiment of the present application and has functional modules and beneficial effects corresponding to the method executed. The apparatus may be performed by software and/or hardware. The apparatus includes a data unit receiving module 20 and a message receiving feedback module 21.

The data unit receiving module 20 is configured to receive at least one issued packet data convergence protocol (PDCP) data protocol data unit (PDU). The PDCP data PDU carries application message indication information.

The message receiving feedback module 21 is configured to send the message receiving feedback according to the application message indication information.

In this embodiment of the present application, at least one issued PDCP data PDU is received by the data unit receiving module 20. The PDCP data PDU carries the application message indication information. The message receiving feedback module 21 sends the message receiving feedback according to the application message indication information. In this manner, the integrity of the application message receiving is improved, and the communication quality can be enhanced.

Based on the preceding embodiments of the present application, the apparatus also includes a data unit sending module.

The data unit sending module is configured to send at least one PDCP data PDU. The PDCP data PDU carries the application message indication information.

Based on the preceding embodiments of the present application, the message receiving feedback module 21 includes a data feedback unit.

The data feedback unit is configured to feed back a packet data convergence protocol (PDCP) status packet or a radio link layer control protocol (RLC) status packet for each PDCP data PDU.

Based on the preceding embodiments of the present application, the message receiving feedback module 21 includes an application feedback unit.

The application feedback unit is configured to determine the application message to which each PDCP data PDU belongs and feed back a PDCP status packet or an RLC status packet for the application message to which each PDCP data PDU belongs.

Based on the preceding embodiments of the present application, the application feedback unit is configured to determine the application message to which each PDCP data PDU belongs according to the application message indication information carried in the PDCP data PDU.

Based on the preceding embodiments of the present application, the application message indication information in the apparatus includes at least one of an application message sequence number, an application message start mark, or an application message end mark.

Based on the preceding embodiments of the present application, the application feedback unit includes a same belonging unit, a start position unit, and an end position unit.

The same belonging unit is configured to determine whether each PDCP data PDU belongs to the same application message according to the application message sequence number in the information frame format of each PDCP data PDU.

The start position unit is configured to determine that transmission of the application message corresponding to each PDCP data PDU starts according to the application message start mark in the information frame format of the protocol frame of each PDCP data PDU.

The end position unit is configured to determine that transmission of the application message corresponding to each PDCP data PDU ends according to the application message end mark in the information frame format of the protocol frame of each PDCP data PDU.

Based on the preceding embodiments of the present application, the apparatus also includes an information indication module.

The information indication module is configured to carry the application message indication information by a medium access control (MAC) header, an RLC header, and a media access control control element (MAC CE).

Based on the preceding embodiments of the present application, the apparatus also includes a number determination unit and a belong determination unit.

The number determination unit is configured to receive the number of PDUs corresponding to the application message and configured by the base station.

The belong determination unit is configured to determine the application message to which each PDCP data PDU belongs according to the number of PDUs.

Based on the preceding embodiments of the present application, the number of PDUs corresponding to the application message in the apparatus is carried by at least one of an RRC message, a PDCP header, MAC, an RLC header, or an MAC CE.

FIG. 30 is a diagram illustrating the structure of a base station according to an embodiment of the present application. The base station includes a processor 50, a memory 51, an input apparatus 52, and an output apparatus 53. One or more processors 50 is disposed in the base station, and one processor 50 is used as an example in FIG. 30. The processor 50, the memory 51, the input apparatus 52, and the output apparatus 53 in the base station may be connected through a bus or other modes. A connection through the bus is used as an example in FIG. 30.

As a computer-readable storage medium, the memory 51 may be configured to store software programs and computer-executable programs and modules, such as the modules (the session acquisition module 10 and the application layer belonging module 11, and/or the data unit receiving module 20 and the message receiving feedback module 21) corresponding to the quality of service flow transmission apparatus in this embodiment of the present application. The processor 50 runs the software programs, instructions, and modules stored in the memory 51 to perform function applications and data processing of the base station, that is, to implement the quality of service flow transmission method described above.

The memory 51 may mainly include a program storage region and a data storage region. The program storage region may store an operating system and an application program required for at least one function, and the data storage region may store data or the like created according to the use of the base station. Additionally, the memory 51 may include a high-speed random-access memory and may also include a non-volatile memory, for example, at least one magnetic disk memory, a flash memory, or another non-volatile solid-state memory. In some examples, the memory 51 may include memories that are remotely disposed with respect to the processor 50. These remote memories may be connected to the base station via a network. Examples of the preceding network include, but are not limited to, the Internet, an intranet, a local area network, a mobile communication network, and a combination thereof.

The input apparatus 52 may be used for receiving inputted digital or character information and for generating key signal input related to user settings and function control of the base station. The output apparatus 53 may include a display device, for example, a display screen.

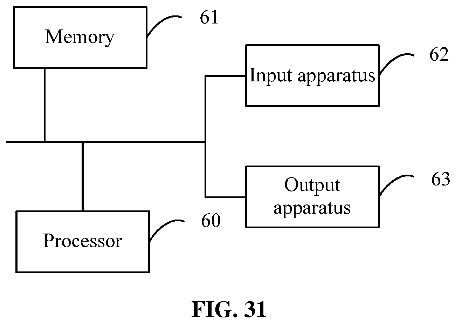

The embodiment related to a terminal as shown in FIG. 31 is not covered by the claimed invention. FIG. 31 is a diagram illustrating the structure of a terminal according to an embodiment of the present application. The terminal includes a processor 60, a memory 61, an input apparatus 62, and an output apparatus 63. One or more processors 60 may be disposed in the terminal, and one processor 60 is used as an example in FIG. 31. The processor 60, the memory 61, the input apparatus 62, and the output apparatus 63 in the terminal may be connected through a bus or other modes. A connection through a bus is used as an example in FIG. 31.

As a computer-readable storage medium, the memory 61 may be configured to store software programs and computer-executable programs and modules, such as the modules (the data unit receiving module 20 and the message receiving feedback module 21) corresponding to the quality of service flow transmission apparatus in this embodiment of the present application. The processor 60 runs the software programs, instructions, and modules stored in the memory 61 to perform function applications and data processing of the terminal, that is, to implement the quality of service flow transmission method described above.

The memory 61 may mainly include a program storage region and a data storage region. The program storage region may store an operating system and an application program required for at least one function, and the data storage region may store data or the like created according to the use of the terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories which are remotely disposed with respect to the processors 60. These remote memories may be connected to the terminal via a network. Examples of the preceding network include, but are not limited to, the Internet, an intranet, a local area network, a mobile communication network, and a combination thereof.

The input device 62 may be used for receiving inputted digital or character information and for generating key signal input related to user settings and function control of the terminal. The output apparatus 63 may include a display device, for example, a display screen.

An embodiment of the present application provides a storage medium including computer-executable instructions. When executing the computer-executable instructions, a computer processor is configured to perform a quality of service flow transmission method. The method includes the following:
At least one protocol data unit (PDU) session sent by a core network is acquired, where information frame format of the PDU session carries application message indication information; and an application message to which each PDCP session belongs is determined according to the application message indication information.

Moreover/Alternatively, the session acquisition module is configured to acquire at least one PDU session sent by the core network. The information frame format of the PDU session carries the application message indication information. The application layer belonging module is configured to determine the application message to which each PDU session belongs according to the application message indication information.

From the preceding description of the embodiments, the present application may be implemented by means of both software and required general-purpose hardware, and also by means of hardware. The technical solutions of the present application may be essentially embodied in the form of a software product. The software product in a computer may be stored in a computer-readable storage medium such as a floppy disk, a read-only memory (ROM), a random-access memory (RAM), a flash memory, a hard disk, or an optical disc in the computer and includes several instructions for enabling a computer device (which may be a personal computer, a server, or a network device) to perform the method of the embodiments of the present application.

Units and modules included in the embodiment of the quality of service flow transmission apparatus are just divided according to the functional logic, and the division is not limited to this, as long as the corresponding functions can be implemented. In addition, the names of each functional unit are just intended for distinguishing and are not to limit the protection scope of the embodiments of the present application.

All or part of the steps in the method, and functional modules/units in the system and device disclosed above may be implemented as software, firmware, hardware and appropriate combinations thereof.

In the hardware implementation, the division of the preceding functional modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed over computer-readable media. The computer-readable media may include computer storage media (or non-transitory media) and communication media (or transitory media). As is known to those having ordinary skill in the art, the computer storage media include volatile and non-volatile as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory, or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Moreover, as is known to those having ordinary skill in the art, the communication media generally include computer-readable instructions, data structures, program modules or other data in carriers or in modulated data signals transported in other transport mechanisms and may include any information delivery medium.

## Claims

1. A quality of service flow transmission method, applied to a base station and comprising:
acquiring (110; 210; 310; 410; 510; 610; 710) at least one protocol data unit, PDU, session information frame format of at least one PDU session sent by a core network, wherein the at least one PDU session information frame format carries indication information; and
determining (120), according to the indication information, a category to which a PDU transmitted in the at least one PDU session belongs;
wherein the indication information comprises application message indication information, and determining (120), according to the indication information, the category to which the PDU transmitted in the at least one PDU session belongs comprises: determining an application message to which the PDU belongs according to the application message indication information; wherein the application message corresponds to a quality of service, QoS, flow; and wherein the application message indication information comprises at least one of an application message start mark or an application message end mark; and wherein determining, according to the application message indication information, the application message to which the PDU belongs comprises:
determining, according to the application message start mark in the at least one PDU session information frame format, a start position of the application message corresponding to the at least one PDU session; and
determining, according to the application message end mark in the at least one PDU session information frame format, an end position of the application message corresponding to the at least one PDU session.

2. The method according to claim 1, wherein the application message indication information comprises at least one of an application message sequence number, an application message end indication, or an application message segment number indication.

3. The method according to claim 1, wherein determining, according to the application message indication information, the application message to which the PDU transmitted in the at least one PDU session belongs comprises at least one of the following:
determining, according to an application message sequence number in the at least one PDU session information frame format, that different PDU sessions in the at least one PDU session belong to a same application message; or
determining, according to an application message end indication in the at least one PDU session information frame format, that transmission of the application message corresponding to the at least one PDU session ends.

4. The method according to claim 1, wherein the application message indication information comprises at least one of an application message sequence number or an application message segment number.

5. The method according to claim 1, further comprising:
acquiring (530) a size of a buffer data volume corresponding to an application message sent by a user equipment, UE, through a buffer status report, BSR;
wherein the size of the buffer data volume corresponding to the application message comprises a size of the application message reported according to a logical channel group; or the size of the buffer data volume corresponding to the application message comprises a size of the application message reported according to a logical channel.

6. The method according to claim 1, further comprising:
determining (630) a characteristic parameter of the application message according to an information element of a QoS flow in the at least one PDU session;
wherein the characteristic parameter comprises at least one of the following:
an application availability target, an application reliability target, a video traffic coding rate, video traffic transmission duration, or a transmission video scale.

7. The method according to claim 1, further comprising:
in a case where at least one of the following operations is performed, receiving (730) configuration information provided by the core network through dedicated signaling:
establishing or modifying a dedicated connection with a UE of the core network; establishing or modifying a PDU session with a UE of the core network; or establishing or modifying an evolved radio access bearer, E-RAB, with a UE of the core network;
wherein the configuration information comprises at least one of the following:
a UE traffic bearer maximum rate requirement, a UE traffic bearer delay requirement, a UE traffic bearer transmission frequency, a UE bearer traffic data volume, UE power consumption information, UE battery charge information, or UE mobility prediction information.

8. A base station, comprising:
at least one processor; and
a memory configured to store at least one program,
wherein when executing the at least one program, the at least one processor performs the quality of service flow transmission method according to any one of claims 1 to 7.

9. A computer-readable storage medium storing a computer program, wherein when executed by a processor, the computer program performs the quality of service flow transmission method according to any one of claims 1 to 7.

10. A quality of service flow transmission apparatus, disposed on a base station and comprising:
a session acquisition module configured to acquire at least one protocol data unit, PDU, session information frame format of at least one PDU session sent by a core network, wherein the at least one PDU session information frame format carries indication information; and
an application layer home module configured to determine a category to which a PDU transmitted in the at least one PDU session belongs according to the indication information;
wherein
the indication information comprises application message indication information, and wherein the application layer home module is configured to: determine an application message to which the PDU belongs according to the application message indication information; wherein the application message corresponds to a quality of service, QoS, flow; and wherein the application message indication information comprises at least one of an application message start mark or an application message end mark; and wherein the application layer home module is configured to:
determine, according to the application message start mark in the at least one PDU session information frame format, a start position of the application message corresponding to the at least one PDU session; and
determine, according to the application message end mark in the at least one PDU session information frame format, an end position of the application message corresponding to the at least one PDU session.

## Patentansprüche

1. Verfahren zur Übertragung von Dienstgüteflüssen, angewandt auf eine Basisstation und umfassend:
Erfassen (110; 210; 310; 410; 510; 610; 710) mindestens eines Protokolldateneinheit-, PDU-, Sitzungsinformationsrahmenformats von mindestens einer PDU-Sitzung, die von einem Kernnetz gesendet wird, wobei das mindestens eine PDU-Sitzungsinformationsrahmenformat Anzeigeinformationen trägt; und
Bestimmen (120) einer Kategorie, zu der eine in der mindestens einen PDU-Sitzung übertragene PDU gehört, entsprechend der Anzeigeinformation;
wobei
die Anzeigedaten Anwendungsnachrichten-Anzeigedaten umfassen, und das Bestimmen (120), gemäß den Anzeigedaten, der Kategorie, zu der die in der mindestens einen PDU-Sitzung übertragene PDU gehört, umfasst: das Bestimmen einer Anwendungsnachricht, zu der die PDU gehört, gemäß den Anwendungsnachrichten-Anzeigedaten; wobei die Anwendungsnachricht einem Dienstgütefluss, QoS, entspricht; und wobei die Anwendungsnachrichten-Anzeigedaten mindestens eine von einer Anwendungsnachrichten-Startmarke oder einer Anwendungsnachrichten-Endmarke umfassen; und wobei das Bestimmen, gemäß den Anwendungsnachrichten-Anzeigedaten, der Anwendungsnachricht, zu der die PDU gehört, umfasst:
Bestimmen einer Startposition der Anwendungsnachricht, die der mindestens einen PDU-Sitzung entspricht, entsprechend der Startmarkierung der Anwendungsnachricht in dem mindestens einen PDU-Informationsrahmenformat; und
Bestimmen einer Endposition der Anwendungsnachricht, die der mindestens einen PDU-Sitzung entspricht, entsprechend der Endmarkierung der Anwendungsnachricht in dem mindestens einen PDU-Informationsrahmenformat.

2. Verfahren nach Anspruch 1, wobei die Anwendungsnachrichten-Anzeigeinformation mindestens eine der folgenden Informationen umfasst: eine Anwendungsnachrichten-Sequenznummer, eine Anwendungsnachrichten-Endanzeige oder eine Anwendungsnachrichten-Segmentnummernanzeige.

3. Verfahren nach Anspruch 1, wobei die Bestimmung der Anwendungsnachricht, zu der die in der mindestens einen PDU-Sitzung übertragene PDU gehört, gemäß der Anwendungsnachrichten-Indikationsinformation mindestens eines der folgenden umfasst:
Bestimmen, dass verschiedene PDU-Sitzungen in der mindestens einen PDU-Sitzung zu einer gleichen Anwendungsnachricht gehören, entsprechend einer Anwendungsnachrichten-Sequenznummer in dem mindestens einen PDU-Sitzungsinformationsrahmenformat; oder
Bestimmung, dass die Übertragung der Anwendungsnachricht, die der mindestens einen PDU-Sitzung entspricht, gemäß einer Endanzeige für die Anwendungsnachricht in dem mindestens einen PDU-Informationsrahmenformat endet.

4. Verfahren nach Anspruch 1, wobei die Anwendungsnachrichten-Indikation mindestens eine der folgenden Informationen umfasst: eine Anwendungsnachrichten-Sequenznummer oder eine Anwendungsnachrichten-Segmentnummer.

5. Verfahren nach Anspruch 1, ferner umfassend:
Erfassen (530) einer Größe eines Pufferdatenvolumens, das einer Anwendungsnachricht entspricht, die von einem Benutzergerät, UE durch einen Pufferstatusbericht, BSR gesendet wurde;
wobei die Größe des Pufferdatenvolumens, das der Anwendungsnachricht entspricht, eine Größe der Anwendungsnachricht umfasst, die gemäß einer logischen Kanalgruppe gemeldet wird; oder die Größe des Pufferdatenvolumens, das der Anwendungsnachricht entspricht, eine Größe der Anwendungsnachricht umfasst, die gemäß einem logischen Kanal gemeldet wird.

6. Verfahren nach Anspruch 1, ferner umfassend:
Bestimmen (630) eines charakteristischen Parameters der Anwendungsnachricht gemäß einem Informationselement eines QoS-Flusses in der mindestens einen PDU-Sitzung;
wobei der charakteristische Parameter mindestens eines der folgenden Merkmale umfasst:
ein Ziel für die Anwendungsverfügbarkeit, ein Ziel für die Anwendungszuverlässigkeit, eine Codierungsrate für den Videoverkehr, eine Übertragungsdauer für den Videoverkehr oder eine Skala für die Videoübertragung.

7. Verfahren nach Anspruch 1, ferner umfassend:
in einem Fall, in dem mindestens eine der folgenden Operationen durchgeführt wird, Empfang (730) von Konfigurationsinformationen, die vom Kernnetz über dedizierte Signalisierung bereitgestellt werden:
Aufbau oder Änderung einer dedizierten Verbindung mit einem UE des Kernnetzes; Aufbau oder Änderung einer PDU-Sitzung mit einem UE des Kernnetzes; oder Aufbau oder Änderung eines weiterentwickelten Funkzugangsträgers, E-RAB, mit einem UE des Kernnetzes;
wobei die Konfigurationsinformationen mindestens eines der folgenden Elemente umfassen:
eine UE-Verkehrsträger-Höchstratenanforderung, eine UE-Verkehrsträger-Verzögerungsanforderung, eine UE-Verkehrsträger-Übertragungsfrequenz, ein UE-Verkehrsträger-Verkehrsdatenvolumen, UE-Stromverbrauchsinformationen, UE-Batterieladeinformationen oder UE-Mobilitätsvorhersageinformationen.

8. Basisstation, umfassend:
mindestens einen Prozessor und
einen Speicher, der zum Speichern mindestens eines Programms konfiguriert ist,
wobei der mindestens eine Prozessor bei der Ausführung des mindestens einen Programms das Dienstgüteflussübertragungsverfahren nach einem der Ansprüche 1 bis 7 durchführt.

9. Computerlesbares Speichermedium, das ein Computerprogramm speichert, wobei das Computerprogramm, wenn es von einem Prozessor ausgeführt wird, das Verfahren zur Übertragung von Datenströmen mit Dienstgüte gemäß einem der Ansprüche 1 bis 7 ausführt.

10. Dienstgütefluss-Übertragungsvorrichtung, die auf einer Basisstation angeordnet ist und umfasst: ein Sitzungserfassungsmodul, das so konfiguriert ist, dass es wenigstens ein Protokolldateneinheit-, PDU-, Sitzungsinformationsrahmenformat wenigstens einer PDU-Sitzung erfasst, die von einem Kernnetz gesendet wird, wobei das wenigstens eine PDU-Sitzungsinformationsrahmenformat Anzeigeinformationen trägt; und
ein Heimatmodul der Anwendungsschicht, das so konfiguriert ist, dass es eine Kategorie bestimmt, zu der eine PDU, die in der mindestens einen PDU-Sitzung übertragen wird, gemäß den Anzeigeinformationen gehört;
wobei
die Anzeigedaten Anwendungsnachrichten-Anzeigedaten umfassen, und wobei das Heimatmodul der Anwendungsschicht konfiguriert ist, um: eine Anwendungsnachricht zu bestimmen, zu der die PDU gemäß den Anwendungsnachrichten-Anzeigedaten gehört; wobei die Anwendungsnachricht einem Dienstgütefluss, QoS entspricht; und
wobei die Anwendungsnachrichten-Anzeigedaten mindestens eine von einer Anwendungsnachrichten-Startmarke oder einer Anwendungsnachrichten-Endmarke umfassen; und wobei das Heimatmodul der Anwendungsschicht konfiguriert ist, um:
Bestimmen einer Startposition der Anwendungsnachricht, die der mindestens einen PDU-Sitzung entspricht, entsprechend der Startmarkierung der Anwendungsnachricht in dem mindestens einen PDU-Sitzungsinformationsrahmenformat; und
Bestimmen einer Endposition der Anwendungsnachricht, die der mindestens einen PDU-Sitzung entspricht, entsprechend der Endmarkierung der Anwendungsnachricht in dem mindestens einen PDU-Informationsrahmenformat.

## Revendications

1. Procédé de transmission de flux de qualité de service, appliquée à une station de base et comprenant:
acquérir (110; 210; 310; 410; 510; 610; 710) au moins une unité de données de protocole, PDU, un format de trame d'information de session d'au moins une session PDU envoyée par un réseau central, dans lequel au moins un format de trame d'information de session PDU contient des informations d'indication; et
déterminer (120), en fonction des informations d'indication, une catégorie à laquelle appartient une PDU transmise dans la session de PDU au moins une fois;
dans lequel
les informations d'indication comprennent des informations d'indication de message d'application, et la détermination (120), en fonction des informations d'indication, de la catégorie à laquelle appartient le PDU transmis dans la au moins une session PDU comprend: la détermination d'un message d'application auquel appartient le PDU en fonction des informations d'indication de message d'application; dans lequel le message d'application correspond à un flux de qualité de service, QoS; et dans lequel les informations d'indication de message d'application comprennent au moins une marque de début de message d'application ou une marque de fin de message d'application; et dans lequel la détermination, en fonction des informations d'indication de message d'application, du message d'application auquel appartient le PDU comprend:
déterminer, en fonction de la marque de début du message d'application dans le format de trame d'information d'au moins une session PDU, une position de début du message d'application correspondant à au moins une session PDU; et
déterminer, en fonction de la marque de fin du message d'application dans le format de trame d'information d'au moins une session PDU, une position de fin du message d'application correspondant à au moins une session PDU.

2. Procédé selon la revendication 1, dans lequel l'information d'indication de message d'application comprend au moins un numéro de séquence de message d'application, une indication de fin de message d'application ou une indication de numéro de segment de message d'application.

3. Procédé selon la revendication 1, dans lequel la détermination, en fonction des informations d'indication du message d'application, du message d'application auquel appartient la PDU transmise dans au moins une session de PDU comprend au moins l'un des éléments suivants:
déterminer, en fonction d'un numéro de séquence de message d'application dans le format de trame d'information d'au moins une session PDU, que différentes sessions PDU dans l'au moins une session PDU appartiennent à un même message d'application; ou
déterminer, en fonction d'une indication de fin de message d'application dans le format d'au moins une trame d'information de session PDU, que la transmission du message d'application correspondant à au moins une session PDU se termine.

4. Procédé selon la revendication 1, dans lequel les informations d'indication de message d'application comprennent au moins un numéro de séquence de message d'application ou un numéro de segment de message d'application.

5. Procédé selon la revendication 1, comprenant en outre:
acquérir (530) la taille d'un volume de données de la mémoire tampon correspondant à un message d'application envoyé par un équipement d'utilisateur, UE, par le biais d'un rapport d'état de la mémoire tampon, BSR;
dans lequel la taille du volume de données tampon correspondant au message d'application comprend une taille du message d'application rapportée selon un groupe de canaux logiques; ou dans lequel la taille du volume de données tampon correspondant au message d'application comprend une taille du message d'application rapportée selon un canal logique.

6. Procédé selon la revendication 1, comprenant en outre:
déterminer (630) un paramètre caractéristique du message d'application en fonction d'un élément d'information d'un flux QoS de qualité de service dans au moins une session PDU;
dans lequel le paramètre caractéristique comprend au moins l'un des éléments suivants:
un objectif de disponibilité de l'application, un objectif de fiabilité de l'application, un taux de codage du trafic vidéo, une durée de transmission du trafic vidéo ou une échelle de transmission vidéo.

7. Procédé selon la revendication 1, comprenant en outre:
dans le cas où au moins l'une des opérations suivantes est effectuée, recevoir (730) des informations de configuration fournies par le réseau central par l'intermédiaire d'une signalisation spécialisée:
établir ou modifier une connexion spécialisée avec un UE du réseau central; établir ou modifier une session PDU avec un UE du réseau central; ou établir ou modifier un support d'accès radio évolué, E-RAB avec un UE du réseau central;
dans lequel les informations de configuration comprennent au moins l'un des éléments suivants:
une exigence de débit maximal du support de trafic de l'UE, une exigence de retard du support de trafic de l'UE, une fréquence de transmission du support de trafic de l'UE, un volume de données de trafic du support de l'UE, des informations sur la consommation d'énergie de l'UE, des informations sur la charge de la batterie de l'UE ou des informations sur la prédiction de la mobilité de l'UE.

8. Station de base comprenant:
au moins un processeur, et
une mémoire configurée pour stocker au moins un programme,
dans lequel, lors de l'exécution de l'au moins un programme, l'au moins un processeur exécute le procédé de transmission de flux de qualité de service selon l'une des revendications 1 à 7.

9. Support de stockage lisible par ordinateur contenant un programme informatique, dans lequel, lorsqu'il est exécuté par un processeur, le programme informatique effectue le procédé de transmission de flux de qualité de service selon l'une quelconque des revendications 1 à 7.

10. Appareil de transmission de flux de qualité de service, installé sur une station de base et comprenant:
un module d'acquisition de session configuré pour acquérir au moins une unité de données de protocole PDU, un format de trame d'information de session d'au moins une session PDU envoyée par un réseau central, dans lequel le format de trame d'information de session d'au moins une PDU contient des informations d'indication; et
un module d'accueil de la couche application configuré pour déterminer une catégorie à laquelle appartient une PDU transmise dans la au moins une session PDU en fonction des informations d'indication;
dans lequel
les informations d'indication comprennent des informations d'indication de message d'application, et dans lequel le module d'accueil de la couche d'application est configuré pour: déterminer un message d'application auquel la PDU appartient en fonction des informations d'indication de message d'application; dans lequel le message d'application correspond à un flux de qualité de service, QoS; et dans lequel les informations d'indication de message d'application comprennent au moins une marque de début de message d'application ou une marque de fin de message d'application; et dans lequel le module d'accueil de la couche d'application est configuré pour:
déterminer, en fonction de la marque de début du message d'application dans le format de trame d'information d'au moins une session PDU, une position de début du message d'application correspondant à l'au moins une session PDU; et
déterminer, en fonction de la marque de fin du message d'application dans le format de trame d'information d'au moins une session PDU, une position de fin du message d'application correspondant à au moins une session PDU.
